# EUROPEAN PATENT SPECIFICATION

(11) **EP 0 319 182 B1**
(45) Date of publication and mention of the grant of the patent: **29.09.1993**
(21) Application number: 88310983.7
(22) Date of filing: 21.11.1988
(51) Int. Cl.: H01M 10/40

(54) **Overcharge protection of secondary, non-aqueous batteries**
Überladeschutz für nichtwässrige Sekundärbatterien
Protection contre une surcharge de batteries secondaires non aqueuses

(30) Priority: 30.11.1987 US 126629
(43) Date of publication of application: 07.06.1989
(73) Proprietor: EIC Laboratories, Inc., Norwood Massachusetts 02062 (US)
(72) Inventor: Abraham, Kuzhikalail M., Needham Massachusetts 02194 (US); Pasquariello, David M., Pautucket Rhode Island 02860 (US)
(74) Representative: Perry, Robert Edward

(56) References cited:
- EP-A- 0 105 768
- EP-A- 0 241 644
- FR-A- 2 191 288
- US-A- 4 091 152
- US-A- 4 459 343
- EXTENDED ABSTRACTS, vol. 85-2, 13th-18th October 1985; WISHVENDER K. BEHL: "Electrochemical overcharge protection in rechargeable lithium cells: Anodic oxidation of lithium bromide in tetrahydrofuran solutions"
- IDEM
- JOURNAL OF APPLIED ELECTROCHEMISTRY, vol. 15, no. 6, 1985, pages 901-906; SHIN-ICHI TOBISHIMA et al.: "Effects of quinoneimine dyes on lithium cycling efficiency for LiC1O4-propylene carbonate"
- J. ELECTROCHEM. SOC., vol. 134, no. 4, April 1987, pages 791-795; CHIAKI IWAKURA et al.: "A new electrode-active material for polymer batteries"

## Description

This invention was made with Government support under contract DAAL01-85-C-0444 awarded by the Department of the Army. The Government has certain rights in this invention. This invention relates to electrochemical cells and more particularly to improved non-aqueous electrolytes for cells incorporating alkali metal negative electrodes (anodes), and especially lithium containing anodes. The improvement features the use of redox reagents, dissolved in non-aqueous electrolytes, to provide overcharge protection.

A crucial component in an ambient temperature secondary Li cell is the electrolyte solution. It is desirable to have a non-aqueous solvent or a mixture of solvents which dissolves an appreciable amount of Li salts to form highly conducting solutions. The electrolyte should afford high efficiency for cycling of the Li electrode and exhibit good thermal stability up to 70°C, a usual upper temperature limit for operation of ambient temperature Li batteries. A highly desirable electrolyte solution for Li batteries is described in U. S. Patent No. 4,489,145. It comprises a solution of LiAsF₆ dissolved in a mixed solvent of tetrahydrofuran (THF) and 2-methyl-tetrahydrofuran (2,Me-THF) containing 2-methylfuran (2,Me-F). Lithium-titanium disulfide (Li/TiS₂) rechargeable cells utilizing this electrolyte composition, and having a capacity of about 5 ampere-hour (Ah), have been discharged and charged (cycled) one hundred to two hundred times. Reference is made to K. M. Abraham, D. M. Pasquariello and F. J. Martin, J. Electrochem. Soc. 133, 643 (1986) and K. M. Abraham, J. L. Goldman and F. J. Martin, in "Proceedings of the 31st Power Sources Symposium", published by the Electrochemical Society, Pennington, N. J. (1984) pp. 98). As described in these publications, Li/Tis₂ cells are normally cycled over the potential range of 1.5 to 2.7V.

Unlike aqueous cells, organic electrolyte cells may not be overcharged. In the case of cells containing solvents such as THF and 2,Me-THF, these solvents become oxidized at ∼3.65V and this process leads to degradation of the cells' cycling ability. In laboratory testing of these batteries, the voltage limits of 1.6 and 2.8V are carefully controlled by electronic cyclers to avoid overcharge. Electronic overcharge control comprises a sensing circuit which prevents current flowing into the cell once it reaches the voltage corresponding to complete charge, i.e. 2.7V for the Li/TiS₂ cell. The incorporation of electronic overcharge controllers in cells lowers the energy density of the battery and increases battery cost.

Overcharge control is especially important when single cells are configured to form a battery. In this case, cell capacity balance may be lost, especially, after repeated cycles of the battery. That is to say the accessible capacity of individual cells may not remain equal. When a battery possessing at least one cell with a lower capacity than the others is charged, the cathode potential of that cell will rise above the normal upper voltage limit. Oxidative degradation of the electrolyte will occur if the electrolyte is not stable at these higher potentials, and this will degrade the cycle life of the battery at an accelerated rate. Even if the electrolyte does not decompose, the capacity of the cells in the battery will increasingly get out of balance with each additional cycle since the stronger cells will not be charged to their full capacity because the weaker cell will contribute a larger fraction of the total cutoff voltage for the battery. While electronic overcharge control circuits for each individual cell can mitigate the imbalance problem in a battery, such devices add significantly to the cost or the battery and decrease its energy density.

A better approach to controlling overcharge is to use a redox shuttle. Here, a material with an appropriate oxidation potential is dissolved in the electrolyte. This material is unreactive until the cell is fully charged. Then at a potential slightly above the normal charge cutoff voltage of the cell, the redox shuttle is electrochemically converted to products which react together to form the starting materials. The cell potential during overcharge will be "fixed" at the oxidation potential of the redox shuttle. The oxidized products diffuse to the anode where they are regenerated. The reduced species are in turn oxidized at the cathode and thus the fixed potential at the cathode is maintained indefinitely, until the charging is terminated.

Necessary properties of a redox shuttle include: good solubility in the electrolyte; an oxidation potential slightly higher than the normal charge limit of the cell but lower than the oxidation potential of the electrolyte; the ability to reduce the oxidized form at the anode without side reactions; and chemical stability in the cell of both the oxidized and reduced forms of the shuttle reagent.

Accordingly, an object of this invention is to Provide a means of chemical overcharge protection to secondary non-aqueous cells by the use of redox reagents.

The invention features a rechargeable electrochemical cell which includes an anode, a cathode, and an electrolyte. The electrolyte is a non-aqueous solvent or a mixture of non-aqueous solvents in which one or more salts and the redox reagent are dissolved. The redox reagent is present in an amount sufficient to maintain proper mass transport for the desired steady overcharge current for the cell.

The redox reagents for overcharge protection are metallocenes, in which cyclic π electron donors such as the pentahaptocyclopentadienyl (h⁵-C₅H₅) and hexahaptobenzene (h⁶-C₆H₆) and related molecules combine with metal atoms to form complexes of the general formula: 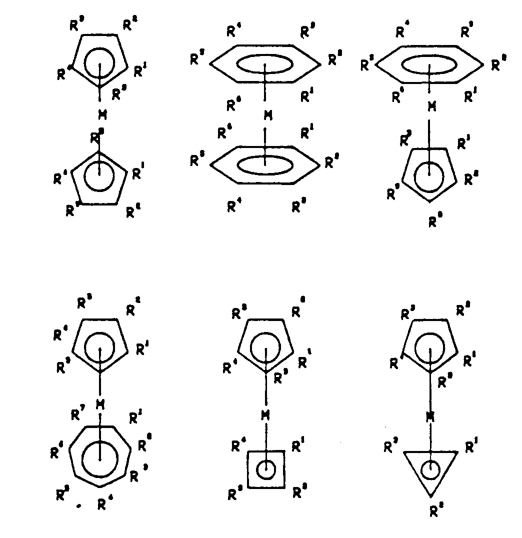
where, M represents metals such as iron, cobalt, nickel, chromium or tungsten and R¹ to R⁷ stand for H or alkyl groups such as methyl, ethyl or butyl.

In preferred embodiments the redox shuttle is ferrocene, or n-butylferrocene, having the structural formulas shown below, and the rechargeable cell is a Li/TiS₂ cell containing a mixed ether electrolyte of the composition described in the teachings of U. S. Patent No. 4,489,145.

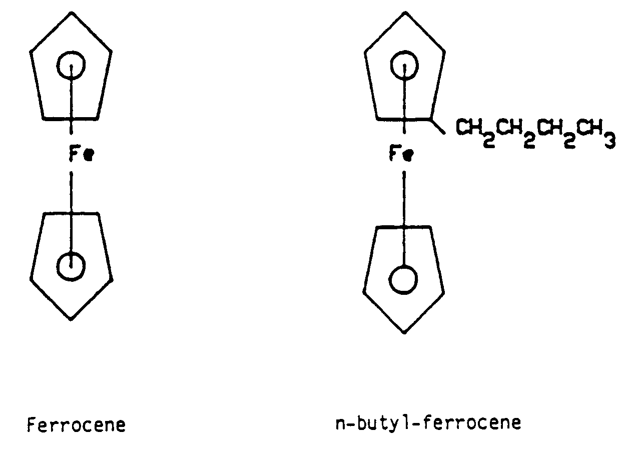

It has been discovered that ferrocene and its derivatives, such as n-butyl-ferrocene, 1,1-dimethylferrocene, N,N-dimethylaminomethylferrocene and decamethylferrocene, are particularly useful as overcharge protection additives for the Li/TiS₂ cell.

The choice of a particular redox reagent will vary with the cathode material used in a rechargeable Li cell. Thus, nickelocene would be most suited for use with cells in which the cathode is fully charged by 2.65V and cobaltocene for cells in which the cathode is fully charged by 1.70V.

Other features, objects and advantages will become apparent from the following specification when read in connection with the accompanying drawing, the single figure of which shows a cycling curve showing overcharge for an exemplary embodiment of the invention.

Cyclic voltammetry was used to screen candidates for use as redox shuttle reagents for overcharge protection in rechargeable Li cells. Results of such experiments are given in Table 1.

**TABLE 1**

| REDOX POTENTIAL RANGES OF CHEMICAL SHUTTLE REAGENTS | |
|---|---|
| Compound | Redox Potential Range (V vs. Li⁺/Li) |
| Ferrocene | 3.05-3.38 |
| 1,1-Dimethylferrocene | 3.06-3.34 |
| n-Butylferrocene | 3.18-3.50 |
| N,N-Dimethylaminomethylferrocene | 3.13-3.68 |
| Nickelocene | 2.63-3.15 |
| Cobaltocene | 1.70-2.13 |

The reactions which are believed to be responsible for the suitability of these materials as redox shuttle reagents for overcharge protection are given in the following equations, illustrated with n-butylferrocene:
At positive electrode (cathode):
n-butylferrocene→ (n-butylferrocene)⁺ + e⁻
At negative electrode (anode):
(n-butylferrocene)⁺ + e⁻ → n-butylferrocene
In Li/TiS₂ cells containing ether electrolytes, oxidation of the redox reagent should take place between ∼2.8 and 3.5V vs. Li⁺/Li. Of the compounds listed in Table 1, ferrocene and its derivatives are the most likely candidates for overcharge protection of such cells.

In a high energy density ambient temperature cell, the positive electrode material preferably consists of titanium disulfide (TiS₂). However, the positive electrode material may comprise other transition metal compounds and notably other insoluble chalcogenides of titanium, zirconium, hafnium, vanadium, niobium, tantalum, molybdenum, tungsten, rhenium, platinum, germanium, iron, tin and lead, e.g., TiS₃, TiSe₂, TiSe₃, ZrS₂, ZrS₃, HfS₂, HfS₃, VS₂, VS₃, NbS₂, TaS₂, TaS₃, ZrSe₂, ZrSe₃. HfSe₂, HfSe₃, VSe₂, VSe₃, NbSe₂, NbSe₃, TaSe₂, TaSe₃ and MoSe₃S and alloys of the foregoing cations such as ZrHfSe₂. Other positive electrode materials may comprise mixed sulfides such as FeₓV₁₋ₓS₂ and CrₓV₁₋ₓS₂ (x<1) and sulfide compounds such as NiPS₃ and metal oxides such as Mo0₃, V₆0₁₃, V₂0₅ and Crₓ0_{y} where y/x is between 1.5 and 3. Soluble and partially soluble positive electrode materials also may be used, notably I₂, Br₂, C1₂, SO₂, S, CuC1, CuC1₂, AgC1, FeC1₂, FeC1₃, and other transition metal halides. Other soluble positive electrode materials that may be used are lithium polysulfide (Li₂Sn) and organic compounds such as chloranil and fluoranil. The requirement for the selection of a metallocene for use as redox shuttle reagent for a given positive electrode is that the oxidation potential of the metallocene be slightly higher than the full charge limit of the cell containing the cathode.

The concentration of the solute (ionic conductor) in the solvent is not critical. Usually, an amount sufficient to yield the desired level of conductivity is used. By way of example, the salt concentration should be such as to give a specific conductivity of about 5 x 10⁻³ ohm⁻¹ cm⁻¹ at about 22°C. The preferred salt is LiAsF₆. However, other lithium salts such as LiC10₄, LiBR₄ (where R=alkyl or aryl groups), LiPF₆, LiA1Br₄, LiSCN, LiA1C1₄, LiBF₄, and lithium salts of organic acids such as trichloroacetic, trifluoromethane sulfonic and formic acids can be used.

The preferred electrolyte solvents are THF and 2,Me-THF. However, embodiments of the invention are equally applicable with other organic solvents such as dioxolane, 1,2-dimethoxyethane (DME), diethylether, dimethoxymethane, trimethoxymethane, tetrahydropyran, 2,methyltetrahydropyran, 3-methyltetrahydrofuran, 2,5-dimethyltetrahydrofuran, and 2,5-dimethyltetrahydropyran, propylene carbonate, ethylene carbonate, butyrolactone and mixtures of these solvents.

The cells used to demonstrate the advantages of this invention contained 7.1 Ah of Li, 2.3 Ah of TiS₂, and at least one of the shuttle reagents described above dissolved in a mixed ether electrolyte solution comprising LiAs₆ in a THF:2MeTHF:MeF mixed ether of the type described in US-A-4489145.

The Li/TiS₂ cells were cycled galvanostatically with the aid of standard cycling equipment. The potential limits for normal cycling were 1.6 V for discharge, and 2.8 V for charge. The cells were discharged to a 100% depth at 0.75 or 1.5 mA/cm², and charged at 0.38 or 0.75 mA/cm²

Overcharge experiments were performed either by changing the upper voltage limit to a value between 3 and 3.5 V versus Li⁺/Li or by potentiostatically setting the positive electrode (TiS₂) at a potential in the range between 3 and 3.5 V versus Li⁺/Li.

Finally, the occurrence of oxidation reactions of the type given above was demonstrated by electrolysis experiments followed by spectroscopic analysis of the resulting solutions.

The following Examples illustrate the invention.

### Example 1

A Li/TiS₂ cell of the description given above was filled with about 8 grams of electrolyte solution containing LiAsF₆ in a mixed ether (THF/2MeTHF/2MeF) and 1.0 molar n-butylferrocene. The cell was cycled at a discharge current density of 0.75 mA/cm² and a charge current density of 0.38 mA/cm² at room temperature. After 34 cycles, the upper voltage limit was raised to 3.5 V, and the cell was allowed to overcharge. Defining overcharge as charge obtained at a potential greater than 2.8 V vs. Li, 866 mAh of overcharge was obtained.

The accompanying drawing shows a cycling curve for the given cell, at the given current densities and at an overcharge of 866 mAh; the electrolyte solution contains 0.2 M n-butylferrocene. The plot of cell potential (V) against capacity (Ah) shows that the overcharge was obtained at a constant potential of 3.25 V vs. Li. A shuttle mechanism is evident, since the overcharge is four times the charge expected for oxidation of the 8 mmol of n-butylferrocene contained in the cell.

### Example 2:

A Li/TiS₂ cell of the description given above was filled with an electrolyte solution containing 0.25 molar ferrocene. The first cycle with this cell was performed between 1.6 and 2.8V at current densities of 1.5 mA/cm² for discharge and 0.75 mA/cm² for charge. The discharge capacity was 2.32 Ah, and 2.24 Ah were regained in the first charge. On the second cycle the potential limit was increased to 3.5V. An overcharge of 120 mAh was observed at a potential of 3.35V. After two more cycles under the regular cycling conditions, the cell was again overcharged. At a charge rate of 0.25 mA/cm², 114 mAh of overcharge (twice the charge expected for oxidation of the ferrocene) was observed, at a potential of ∼3.3V. The original cycling conditions were resumed, and a total of 124 cycles were obtained. The cycle life of the cell is the same as that obtained in similar cells without ferrocene. No adverse effect of either the overcharge or ferrocene on the cycle life of the Li/TiS₂ cell was observed.

### Example 3:

A series of cells of the above description containing electrolyte solutions with n-butylferrocene were maintained at a constant potential, and the resulting current was observed.

A cell which contained the baseline ether mixture and LiAsF₆ with 0.15 molar n-butylferrocene, was maintained at 3.35V for 2.5 h. The initial current, 700 mA, decayed to a limiting value of 63 mA during the course of the experiment. The toal overcharge was 324 mAh, or 10 times the number of coulombic equivalents expected for one-electron oxidation of n-butylferrocene.

A cell containing the same electrolyte solution, except that the n-butylferrocene concentration was increased to 0.5 M, was charged at 3.3 and 3.5V. At 3.3V, the current was 100 mA. The cell was held at 3.3V long enough to produce 8 mAh of overcharge. The voltage was then increased to 3.50V and held there for two hours. The limiting current was 124 mA and the charge was 319 mAh. The total overcharge was 327 mAh or 3 times the theoretical coulombic charge for this one-electron oxidation of the 4 mmol of n-butylferrocene present.

### Example 4:

Electrolysis experiments confirmed that oxidation of the n-butylferrocene occurs at the cathode. A three compartment cell with the compartments separated by glass frits was filled with a 0.2 molar solution of n-butylferrocene in the mixed ether electrolyte with LiAsF₆ as the electrolyte.

The working electrode was a Teflon-bonded carbon electrode having 1.4cm²/side, and the counter and reference electrodes were Li. The glass frit separator prevented significant mixing of the anolyte and the catholyte. The open circuit potential was 3.09V. When a constant charging current of 0.5 mA (∼0.3 mA/cm² was applied, the oxidation potential was constant at 3.3V vs. Li⁺/Li. During charging for 18 h (9 mAh), the solution in the cathode compartment turned blue-green. Whereas UV-VIS specta of the starting solution showed two absorbance maxima at 440 and 320 nm, the blue-green solution showed a strong absorption maximum at 630 nm. The latter absorption is due to the formation of the oxidized form of n-butylferrocene.

Also, electrolytes containing redox shuttle reagents prepared in accordance with this invention may be used where the anode essentially includes or is a material other than lithium, e.g., sodium, potassium, magnesium, calcium or zinc, or mixtures thereof with or without lithium.

## Claims

1. A rechargeable non-aqueous battery cell comprising an anode, a cathode and, in contact with the anode and the cathode, a non-aqueous electrolyte in which a salt and a redox reagent are dissolved, wherein the oxidation potential of the electrolyte is slightly higher than the full charge limit of the cell, the amount of the redox reagent is sufficient to maintain proper mass transport for a predetermined steady overcharge current, and the redox reagent is a metallocene having one of the formulae: 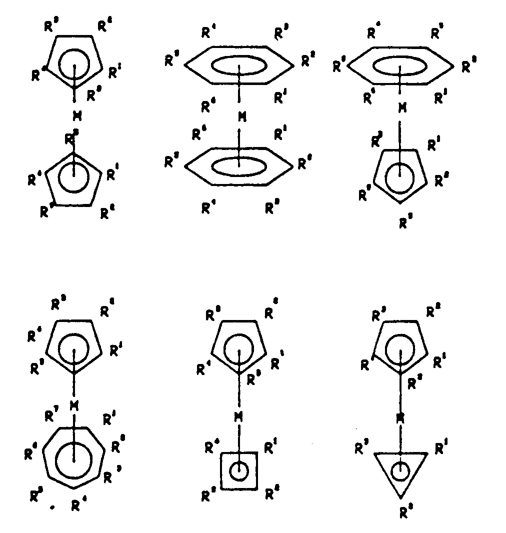 wherein M is a metal and R¹ to R⁷ are each H or alkyl.

2. A cell in accordance with claim 1, wherein M is iron, cobalt, nickel, chromium or tungsten.

3. A cell in accordance with claim 1 or claim 2, wherein R¹ to R⁶ are each H, methyl, ethyl or butyl.

4. A cell in accordance with claim 1, wherein the metallocene is ferrocene or a derivative thereof.

5. A cell in accordance with claim 1, wherein the metallocene is ferrocene or n-butylferrocene.

6. A cell in accordance with any preceding claim, wherein the anode is lithium-containing.

7. A cell in accordance with claim 6, comprising a lithium anode and a TiS₂ cathode.

## Patentansprüche

1. Wiederaufladbare, nichtwässerige Batteriezelle umfassend eine Anode, eine Kathode und, in Kontakt mit der Anode und der Kathode, einen nichtwässerigen Elektrolyten, in dem ein Salz und ein Redoxreagens gelöst sind, wobei das Oxidationspotential des Elektrolyten geringfügig höher ist als die Grenze der vollständigen Ladung der Zelle, und die Menge des Redoxreagens ausreichend ist, um für einen vorgegebenen stetigen Überladungsstrom einen geeigneten Massentransport aufrechtzuhalten, und worin das Redoxreagens ein Metallocen ist, das eine der Formeln besitzt: 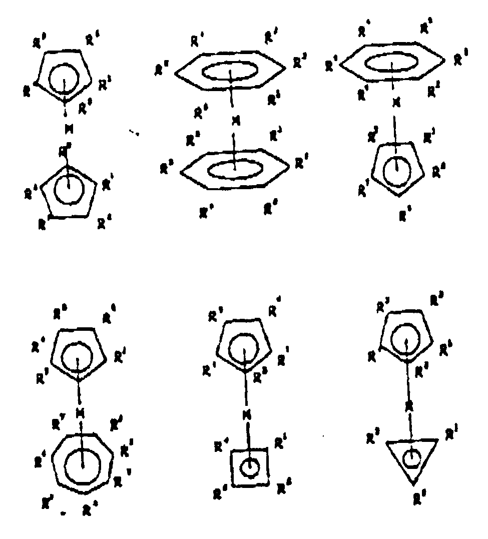 worin M ein Metall ist, und jeder der Rester R¹ bis R⁷ H oder Alkyl bedeutet.

2. Zelle nach Anspruch 1, dadurch gekennzeichnet, daß M Eisen, Kobalt, Nickel, Chrom oder Wolfram ist.

3. Zelle nach Anspruch 1 oder 2, dadurch gekennzeichnet, daß jeder der Reste R¹ bis R⁷ H, Methyl, Ethyl oder Butyl ist.

4. Zelle nach Anspruch 1, dadurch gekennzeichnet, daß das Metallocen Ferrocen oder ein Derivat davon ist.

5. Zelle nach Anspruch 1, dadurch gekennzeichnet, daß das Metallocen Ferrocen oder n-Butylferrocen ist.

6. Zelle nach einem der vorhergehenden Ansprüche, dadurch gekennzeichnet, daß die Anode Lithium enthält.

7. Zelle nach Anspruch 6, dadurch gekennzeichnet, daß sie eine Lithium-Anode und eine TiS₂-Kathode umfaßt.

## Revendications

1. Pile rechargeable non aqueuse comprenant une anode, une cathode et, en contact avec l'anode et la cathode, un électrolyte non aqueux dans lequel sont dissous un sel et un réactif redox, dans laquelle le potentiel d'oxydation de l'électrolyte est légèrement supérieur à la limite de pleine charge de la cellule, la quantité de réactif redox est suffisante pour maintenir un transfert de masse adapté pour un courant de surcharge constant prédéterminé, et le réactif rédox est un métallocène ayant l'une des formules suivantes : 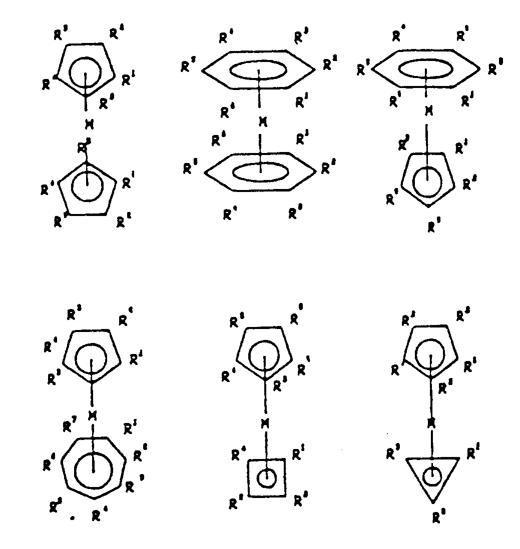 dans lesquelles, M représente un métal et R¹ à R⁷ représentent chacun un atome d'hydrogène ou un groupement alkyle.

2. Pile selon la revendication 1, dans laquelle M est le fer, le cobalt, le nickel, le chrome ou le tungstène.

3. Pile selon la revendication 1 ou 2, dans laquelle R¹ à R⁷ représentent chacun un atome d'hydrogène, un groupement méthyle, un groupement éthyle ou un groupement butyle.

4. Pile selon la revendication 1, dans laquelle le métallocène est le ferrocène ou un de ses dérivés.

5. Pile selon la revendication 1, dans laquelle le métallocène est le ferrocène ou le n-butylferrocène.

6. Pile selon l'une quelconque des revendications précédentes dans laquelle l'anode contient du lithium.

7. Pile selon la revendication 6, comprenant une anode au lithium et une cathode à base de TiS₂.
